# EUROPEAN PATENT SPECIFICATION

(11) **EP 3 561 190 B1**
(45) Date of publication and mention of the grant of the patent: **29.11.2023**
(21) Application number: 17892235.7
(22) Date of filing: 12.06.2017
(51) Int. Cl.: E04B 2/88, F16B 13/06, E04F 13/072, F16B 13/14, F16B 13/08

(54) **SCREW-IN ANCHOR BOLT AND METHOD FOR INSTALLING CURTAIN WALL AND PANEL THEREWITH**
EINSCHRAUBBARER ANKERBOLZEN UND VERFAHREN ZUR INSTALLATION EINER VORHANGFASSADE UND TAFEL DAMIT
BOULON D'ANCRAGE À VISSER ET PROCÉDÉ PERMETTANT D'INSTALLER UN MUR RIDEAU ET UN PANNEAU AVEC CE DERNIER

(30) Priority: 19.01.2017 CN 201710046623
(43) Date of publication of application: 30.10.2019
(73) Proprietor: Topin (Shanghai) International Trader Co., Ltd., Shanghai 212000 (CN)
(72) Inventor: LIU, Li, Shanghai 212000 (CN)
(74) Representative: Osterhoff, Utz
(86) International application number: PCT/CN2017/087885
(87) International publication number: WO 2018/133299

(56) References cited:
- EP-A1- 0 222 095
- EP-A2- 1 903 220
- CN-A- 102 797 312
- CN-A- 104 499 622
- CN-A- 105 064 557
- CN-A- 106 286 523
- CN-Y- 2 485 472
- CN-Y- 2 711 439
- CN-Y- 201 078 375
- DE-U1- 9 214 581
- JP-A- 2002 327 500
- US-B1- 8 468 765

## Description

### CROSS-REFERENCE TO RELATED APPLICATIONS

The present application is the National Stage of International Patent Application No. PCT/CN2017/087885 with a filing date of June 12, 2017, designating the United States, now pending, and further claims priority to Chinese Patent Application No. 201710046623.6 with a filing date of January 19, 2017.

### FIELD

The present disclosure relates to the field of back bolts, particularly relates to a screw-in back bolt and a method for installing a curtain wall and a panel therewith, and more particularly relates to a double-conical-surface screw-in back bolt.

### BACKGROUND

In the prior art, there are generally two manners in order to achieve the installation of a curtain wall. One manner is that a panel is adhered using the adhesive, and in this manner, all bearing forces of the panel are from viscous forces of the adhesive, which is not beneficial to long-time dry hanging of the panel, and is complicated in construction. The other manner is to adopt an expandable anchor bolt which is an anchor bolt utilizing an expandable member to extrude the hole wall of the anchor hole to form an anchoring effect, and is an assembly which utilizes the opposite movement of a conical body relative to the expandable sheet to promote the expansion of the expandable sheet to generate an expansion pressure with the hole wall panel and generate a pulling-resistant force through a shearing friction effect to anchor the connected member. However, this manner causes stress concentration inside the panel so as to increase the burden on a panel structure strength requirement and it is incapable of installing an ultra-thin panel.

EP 0 222 095 A relates to corrosion protection for an expansion anchor anchored in a blind hole, preferably an impact expansion anchor that can be anchored in a borehole provided with an undercut by being driven in, which has a stud bolt that is supported on the bottom of the borehole and is provided with an expansion cone, on the expansion cone of which an expansion sleeve can be driven. The object is to provide corrosion protection for an expansion anchor anchored in a blind hole, which protects both the part of the expansion anchor located in the drilled hole and the reinforcement of the concrete that may have been cut through the drilled hole.

### SUMMARY

The invention is a method of installing a panel in accordance with claim 1 and a curtain wall installed by using this method. Such a method for installing a panel based on a screw-in back bolt provided according to the disclosure includes: step A: drilling an anchor bolt hole in the back of a panel; step B: injecting an adhesive into the anchor bolt hole; step C: placing an back bolt sleeve of the back bolt into the anchor bolt hole; and step D: screwing a limit screw of the back bolt into the back bolt sleeve so that the back bolt sleeve is spread.

The step A includes: step A1: drilling a straight hole in the back of the panel; and step A2: expanding the bottom of the straight hole into a counterbore, wherein, the counterbore has a pressure-bearing surface capable of locking the spread back bolt sleeve in an axial direction.

The counterbore is only capable of locking the spread back bolt sleeve in an axial direction.

Preferably, the step B includes: step B1: injecting the adhesive into the anchor bolt hole, the injection amount meets: the adhesive is capable of filling all or partial anchor bolt holes after the back bolt is spread, and the adhesive includes an epoxy resin AB adhesive.

Preferably, the step C includes: step C1: pushing the back bolt sleeve of the back bolt into the anchor bolt hole until the front end of the back bolt sleeve is abutted against the hole bottom of the anchor bolt hole, wherein, before spread, a maximal diameter of the back bolt sleeve is smaller than a minimal diameter of the anchor bolt hole.

Preferably, the step D includes: step D1: screwing a limit screw in place, wherein, screwing the limit screw in place means that the front part of the back bolt sleeve is spread until being locked by the pressure-bearing surface of the counterbore in an axial direction, and the back bolt sleeve is capable of freely rotating in the anchor bolt hole.

Preferably, the method for installing a panel based on a screw-in back bolt includes: step E: screwing a slip preventing nut on the limit screw to lock a metal suspender.

The screw-in back bolt provided according to the disclosure includes a back bolt sleeve and a limit screw; the front part of the back bolt sleeve is an expandable portion capable of being spread by the limit screw; the limit screw is capable of being screwed in from the rear end of the back bolt until the limit screw is locked; and the expandable portion of the back bolt sleeve is provided with one or more conical surfaces.

The disclosure provides a curtain wall installed by adopting the method for installing a panel based on the screw-in back bolt.

The disclosure provides a curtain wall, including a panel and the above screw-in back bolt; an anchor bolt hole is drilled in the back of the panel, the back bolt sleeve of the screw-in back bolt is located in the anchor bolt hole, and the back bolt sleeve is spread by the screwed limit screw; the spread back bolt sleeve is locked by the anchor bolt hole in an axial direction; and the back bolt sleeve is firmly connected with the anchor bolt hole through the adhesive in circumferential and radial directions.

Aiming at the defects in the prior art, the objective of the disclosure is to provide a screw-in back bolt and a method for installing a panel.

Compared with the prior art, the disclosure has the following beneficial effects:
1. The disclosure combines mechanical locking and chemical adhesion, so as to greatly improve the installation structure strength of the panel, and installation is simple and safe.
2. The disclosure is suitable for multiple curtain wall panel materials and can be applied to a 9 mm board, more use of thin boards saves the expense of the expansive board material and even reduces material drawing limitation due to high building structure requirement.
3. In the disclosure, a completely matched back bolt is adopted in the counterbore spread at the bottom of the anchor bolt hole, so that a sufficiently strong support force can be achieved, and the panel has no any internal stress, thereby reducing the damage rate of the panel.

### BRIEF DESCRIPTION OF THE DRAWINGS

Other features, objectives and advantages of the disclosure will become more apparent by referring to detailed description of non-limiting embodiments made according to the following accompanying drawings.
FIG. 1 is a structural diagram of back bolt installed by a method in accordance with the invention. O represents a length of an exposed limit screw.
FIG. 2 is an exploded view of a component in FIG. 1. D represents a length of a back bolt sleeve in an axial direction. S represents a length of a limit screw.

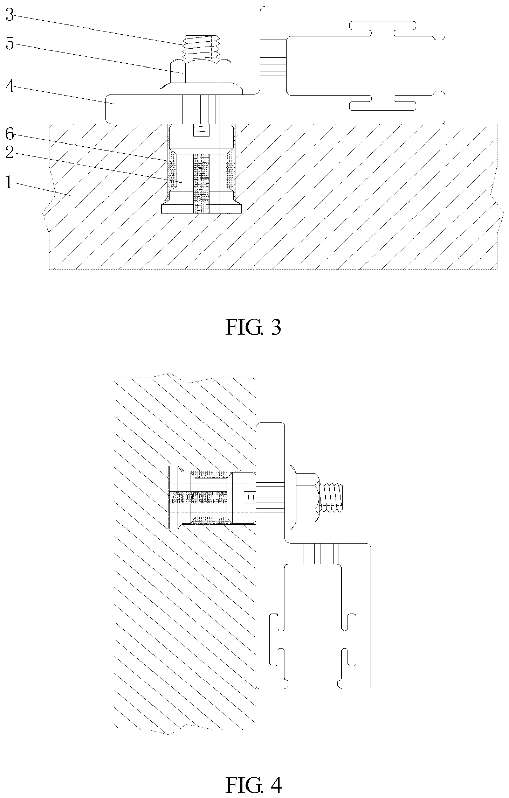

FIG. 3 is a structural diagram of an installed back bolt.
FIG. 4 is a structural diagram of an installed back bolt.

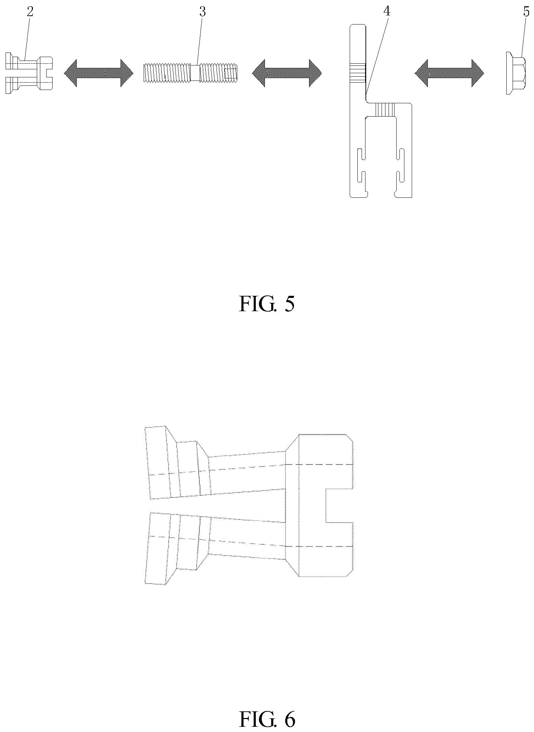

FIG. 5 is an exploded view of a component in FIG. 4.
FIG. 6 is a structural diagram of a back bolt sleeve before being spread.

In the drawings:
1-panel
101-straight hole section
102-counterbore section
103-pressure-bearing surface
2-back bolt sleeve
3-limit screw
301-positioning line (also referred to as a limit line)
4-installation bracket (also referred to as a suspender)
5-slip preventing nut
6-adhesive

### DETAILED DESCRIPTION

The disclosure will be described in detail in combination with embodiments. The following examples will help those skilled in the art to understand the disclosure, but does not limit the disclosure in any form. It should be noted that for one of ordinary skill in the art, several changes and modifications can also be made without breaking away from conception of the disclosure. These all belong to the protection scope of the disclosure.

The disclosure provides a screw-in back bolt, also provides a method for installing a panel based on the screw-in back bolt, and further provides a curtain wall based on the screw-in back bolt and utilizing the installation method. In the following, the disclosure will be described in detail.

The disclosure provides a method for installing a panel based on a screw-in back bolt, including:
Step A: drilling an anchor bolt hole in the back of a panel;
Step B: injecting an adhesive into the anchor bolt hole;
Step C: placing a back bolt sleeve of the back bolt into the anchor bolt hole;
Step D: screwing a limit screw of the back bolt into the back bolt sleeve so that the back bolt sleeve is spread; and
Step E: screwing a slip preventing nut on the limit screw to lock a metal suspender.

The step A includes: step A1: drilling a straight hole in the back of the panel; and step A2: expanding the bottom of the straight hole into a counterbore, wherein, the counterbore has a pressure-bearing surface capable of locking the spread back bolt sleeve in an axial direction.

The counterbore is only capable of locking the spread back bolt sleeve in an axial direction.

The step B includes: step B1: injecting the adhesive into the anchor bolt hole, wherein, the injection amount meets: the adhesive is capable of filling all or partial anchor bolt holes after the back bolt is spread. Preferably, the adhesive can be an epoxy resin AB adhesive (high-elasticity 6101 and 618 series are preferably used). During the epoxy time of the adhesive, the back bolt sleeve is installed and the limit screw is installed in place. The adhesive can be injected into a position which is 50% of the depth of the anchor bolt hole. When the limit screw is installed in the back bolt sleeve, the epoxy adhesive fills all the holes in the anchor bolt holes so as to ensure that all the back bolts on the panel are effective and stressed, thereby reducing the dropping risk of the panel to zero.

The step C includes: step C1: pushing the back bolt sleeve of the back bolt into the anchor bolt hole until the front end of the back bolt sleeve is abutted against the hole bottom of the anchor bolt hole, wherein, before spread, a maximal diameter of the back bolt sleeve is smaller than a minimal diameter of the anchor bolt hole. The back bolt sleeve can be all or partially embedded into the anchor bolt hole.

The step D includes: step D1: screwing a limit screw in place, wherein, screwing the limit screw in place means that the front part of the back bolt sleeve is spread until being locked by the pressure-bearing surface of the counterbore in an axial direction, and the back bolt sleeve is capable of freely rotating in the anchor bolt hole. Preferably, the limit screw is provided with a limit line, when the limit line is parallel to the hole mouth of the anchor bolt hole or the back end surface of the anchor bolt hole, the limit screw is right screwed in place. Through the continuous rotation of the limit screw, the limit screw is screwed into the back bolt sleeve in the panel layer by layer. When being rotated in place according to indication of the limit line, the limit screw is installed in place. The rotation torsion in the whole process is only 12N m/s. After installation, before the adhesive is solidified, the back bolt can be freely rotated in the anchor bolt hole of the panel without stress concentration on the inside of the panel.

The disclosure provides a screw-in back bolt, including a back bolt sleeve and a limit screw. The front part of the anchor bolt sleeve is an expandable portion capable of is spread by the limit screw; the limit screw is screwed in from the rear end of the back bolt sleeve; when the expandable portion is not spread, the outer diameter of the expandable portion is smaller than that of the rear of the back bolt sleeve.

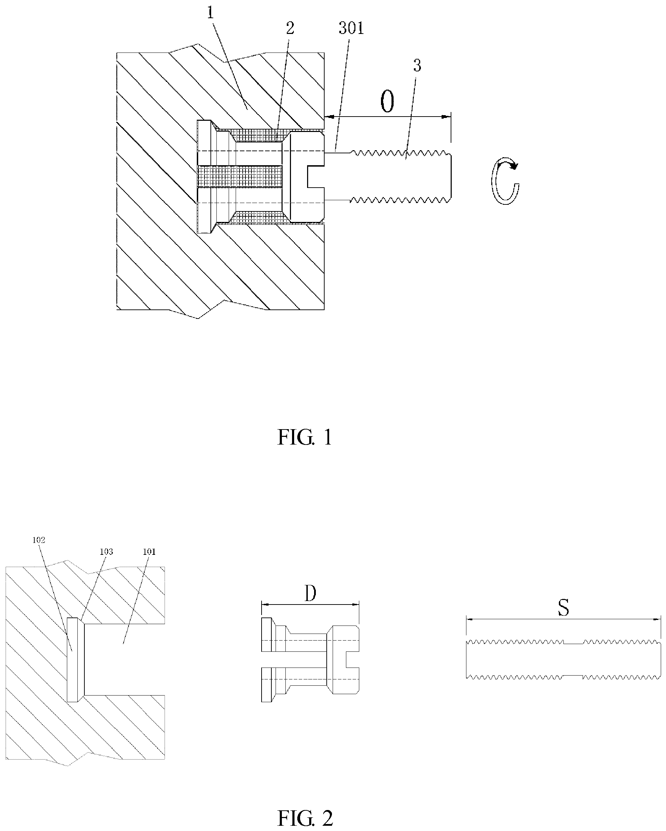

As shown in FIG. 1, the expandable portion of the back bolt sleeve is provided with more conical surfaces, respectively denoted as a first conical surface and a second conical surface, wherein, the conical surface is of a local side shape of a frustum. Further particularly, the first conical surface is matched with the pressure-bearing surface of the counterbore, namely, the first conical surface is clamped inside the pressure-bearing surface, so that the back bolt sleeve cannot be pulled out from the counterbore; the second conical surface is matched with the adhesive, so as to greatly improve the strength of the screw-in back bolt.

The disclosure provides a curtain wall. The curtain wall is installed by adopting the method for installing a panel based on the screw-in back bolt.

The disclosure provides a curtain wall, including a panel and the above screw-in back bolt; an anchor bolt hole is drilled in the back of the panel, the back bolt sleeve of the screw-in back bolt is located in the anchor bolt hole, and the back bolt sleeve is spread by the screwed limit screw; the spread back bolt sleeve is locked by the anchor bolt hole in an axial direction; the back bolt sleeve is firmly connected with the anchor bolt hole through the adhesive in circumferential and radial directions.

The above contents are description of embodiments of the disclosure. It should be understood that the invention is not limited to the above specific embodiments, those skilled in the art can make various changes or modifications within the scope of the claims, which does not influence the substantial content of the disclosure. In case without conflict, embodiments of the present application and features in embodiments can be mutually combined randomly.

## Claims

1. A method for installing a panel (1) based on a screw-in back bolt, wherein the screw-in back bolt comprises a back bolt sleeve (2) and a limit screw (3), a front part of the back bolt sleeve (2) is an expandable portion configured for being spread by the limit screw (3), the limit screw (3) is configured for being screwed in from a rear end of the back bolt sleeve (2) until the limit screw (3) is locked, and the expandable portion of the back bolt sleeve (2) is provided with a first conical surface and a second conical surface, wherein the method comprises:
step A: drilling an anchor bolt hole in a back of the panel (1);
step B: injecting an adhesive (6) into the anchor bolt hole;
step C: placing an back bolt sleeve (2) of the back bolt into the anchor bolt hole; and
step D: screwing a limit screw (3) of the back bolt into the back bolt sleeve (2) so that the back bolt sleeve (2) is spread;
wherein, the step A comprises:
step A1: drilling a straight hole in the back of the panel (1); and
step A2: expanding a bottom of the straight hole into a counterbore, wherein, the counterbore has a pressure-bearing surface (103) configured for locking the spread back bolt sleeve (2) in an axial direction;
wherein, the counterbore is only configured for locking the spread back bolt sleeve (2) in the axial direction;
**characterized in that**, the first conical surface is clamped inside the pressure-bearing surface (103) to lock the spread back bolt sleeve (2) in the axial direction, and the second conical surface is matched with the adhesive (6) to firmly connect the spread back bolt sleeve (2) and the anchor bolt hole in circumferential and radial directions.

2. The method according to claim 1, wherein, the step B comprises:
step B1: injecting the adhesive (6) into the anchor bolt hole, wherein, an injection amount meets: the adhesive (6) is configured for filling all or partial anchor bolt holes after the back bolt is spread; and the adhesive (6) comprises an epoxy resin AB adhesive.

3. The method according to claim 1, wherein, the step C comprises:
step C1: pushing the back bolt sleeve (2) of the back bolt into the anchor bolt hole until a front end of the back bolt sleeve (2) is abutted against the hole bottom of the anchor bolt hole;
wherein, before spread, a maximal diameter of the anchor bolt sleeve is smaller than a minimal diameter of the anchor bolt hole.

4. The method according to claim 1, wherein, the step D comprises:
step D1: screwing a limit screw (3) in place, wherein, screwing the limit screw (3) in place means that the front part of the back bolt sleeve (2) is spread until being locked by the pressure-bearing surface (103) of the counterbore in an axial direction, and the back bolt sleeve (2) is configured for freely rotating in the anchor bolt hole.

5. The method according to claim 1, comprising:
step E: screwing a slip preventing nut (5) on the limit screw (3) to lock a metal suspender.

6. A curtain wall installed by using the method according to claim 1.

## Patentansprüche

1. Verfahren zur Montage eines Paneels (1) auf Basis eines einschraubbaren Rückbolzen, wobei der einschraubbare Rückbolzen eine Rückbolzenhülse (2) und eine Begrenzungsschraube (3) umfasst, wobei ein vorderer Teil der Rückbolzenhülse (2) ein aufspreizbarer Abschnitt ist, der so konfiguriert ist, dass er durch die Begrenzungsschraube (3) aufgespreizt wird, wobei die Begrenzungsschraube (3) so konfiguriert ist, dass sie von einem hinteren Ende der Rückbolzenhülse (2) eingeschraubt wird, bis die Begrenzungsschraube (3) verriegelt ist, und wobei der aufspreizbare Abschnitt der Rückbolzenhülse (2) mit einer ersten konischen Oberfläche (201) und einer zweiten konischen Oberfläche (202) versehen ist, wobei das Verfahren umfasst:
Schritt A: Bohren eines Ankerbolzenlochs in die Rückseite des Paneels (1);
Schritt B: Einspritzen eines Klebstoffs (6) in das Ankerbolzenloch;
Schritt C: Einsetzen einer Rückenbolzenhülse (2) des Rückenbolzens in das Ankerbolzenloch; und
Schritt D: Einschrauben einer Begrenzungsschraube (3) des Rückenbolzens in die Rückbolzenhülse (2), so dass die Rückbolzenhülse (2) gespreizt wird;
wobei der Schritt A umfasst:
Schritt A1: Bohren eines geraden Lochs in die Rückseite der Paneels (1); und
Schritt A2: Aufspreizen eines Bodens des geraden Lochs zu einer Senkbohrung, wobei die Senkbohrung eine drucktragende Oberfläche (103) aufweist, die so konfiguriert ist, dass sie die aufgespreizte Rückbolzenhülse (2) in einer axialen Richtung verriegelt;
wobei die Senkbohrung nur zur Verriegelung der aufgespreizte Rückbolzenhülse (2) in axialer Richtung ausgebildet ist;
**dadurch gekennzeichnet, dass** die erste konische Oberfläche (201) innerhalb der drucktragenden Fläche (103) eingeklemmt ist, um die aufgespreizte Rückbolzenhülse (2) in der axialen Richtung zu verriegeln, und die zweite konische Oberfläche (202) mit dem Klebstoff (6) abgestimmt ist, um die aufgespreizte Rückbolzenhülse (2) und das Ankerbolzenloch in Umfangs- und Radialrichtung fest zu verbinden.

2. Verfahren nach Anspruch 1, wobei der Schritt B umfasst:
Schritt B1: Einspritzen des Klebstoffs (6) in das Ankerbolzenloch, wobei eine Einspritzmenge erfüllt ist: der Klebstoff (6) ist so konfiguriert, dass er alle oder einen Teil der Ankerbolzenlöcher füllt, nachdem der Rückbolzen gespreizt ist; und wobei der Klebstoff (6) umfasst einen Epoxidharz-AB-Klebstoff.

3. Verfahren nach Anspruch 1, wobei der Schritt C umfasst:
Schritt C1: Einschieben der Rückbolzenhülse (2) des Rückbolzens in das Ankerbolzenloch, bis ein vorderes Ende der Rückbolzenhülse (2) am Lochboden des Ankerbolzenlochs anliegt; wobei vor dem Aufspreizen ein maximaler Durchmesser der Rückbolzenhülse kleiner als ein minimaler Durchmesser des Ankerbolzenlochs ist.

4. Verfahren nach Anspruch 1, wobei der Schritt D umfasst:
Schritt D1: Einschrauben einer Begrenzungsschraube (3), wobei das Einschrauben der Begrenzungsschraube (3) bedeutet, dass der vordere Teil der Rückbolzenhülse (2) gespreizt wird, bis er durch die drucktragende Oberfläche (103) der Senkbohrung in einer axialen Richtung verriegelt wird, und wobei die Rückbolzenhülse (2) ist so konfiguriert, dass sie sich frei im Ankerbolzenloch drehen kann.

5. Verfahren nach Anspruch 1, umfassend:
Schritt E: Einschrauben einer Gleitschutzmutter (5) auf die Begrenzungsschraube (3), um einen Metallaufhänger zu sichern.

6. Vorhangfassade, die unter Anwendung des Verfahrens nach Anspruch 1 installiert wird.

## Revendications

1. Procédé d'installation d'un panneau (1) basé sur un boulon arrière à visser, dans lequel le boulon arrière à visser comprend un manchon de boulon arrière (2) et une vis de fin de course (3), une partie avant du manchon de boulon arrière (2) est une portion extensible configurée pour être écartée par la vis de fin de course (3), la vis de fin de course (3) est configurée pour être vissée à partir d'une extrémité arrière du manchon de boulon arrière (2) jusqu'à ce que la vis de fin de course (3) est verrouillée, et la portion extensible du manchon de boulon arrière (2) est pourvue d'une première surface conique (201) et d'une deuxième surface conique (202), dans lequel le procédé comprend :
étape A : percer un trou de boulon d'ancrage à l'arrière du panneau (1) ;
étape B : injecter un adhésif (6) dans le trou de boulon d'ancrage ;
étape C : placer un manchon de boulon arrière (2) du boulon arrière dans le trou de boulon d'ancrage ; et
étape D : visser une vis de fin de course (3) du boulon arrière dans le manchon de boulon arrière (2) de sorte que le manchon de boulon arrière (2) soit écarté ;
dans lequel l'étape A comprend :
étape A1 : percer un trou droit à l'arrière du panneau (1) ; et
étape A2 : dilater un fond du trou droit pour former un contre-alésage, dans lequel le contre-alésage présente une surface sous pression (103) configurée pour verrouiller le manchon de boulon écarté (2) dans un sens axial ;
dans lequel le contre-alésage n'est configuré que pour verrouiller le manchon de boulon arrière (2) écarté dans le sens axial ;
**caractérisé en ce que**, la première surface conique (201) est serrée à l'intérieur de la surface sous pression (103) pour verrouiller le manchon de boulon arrière (2) écarté dans le sens axial, et la deuxième surface conique (202) est adapté à l'adhésif (6) pour relier étroitement le manchon de boulon arrière (2) écarté et le trou de boulon d'ancrage dans les sens circonférentiel et radial.

2. Procédé selon la revendication 1, dans lequel l'étape B comprend :
étape B1 : injecter l'adhésif (6) dans le trou de boulon d'ancrage, dans lequel une quantité d'injection satisfait : l'adhésif (6) est configuré pour remplir tout ou partie des trous des boulons d'ancrage une fois le boulon arrière écarté ; et l'adhésif (6) comprend un adhésif AB à base de résine époxy.

3. Procédé selon la revendication 1, dans lequel l'étape C comprend :
étape C1 : pousser le manchon de boulon arrière (2) du boulon arrière dans le trou de boulon d'ancrage jusqu'à ce qu'une extrémité avant du manchon de boulon arrière (2) soit aboutée contre le fond du trou de boulon d'ancrage ;
dans lequel, avant l'écartement, un diamètre maximal du manchon du boulon d'ancrage est inférieur à un diamètre minimal du trou de boulon d'ancrage.

4. Procédé selon la revendication 1, dans lequel l'étape D comprend :
étape D1 : visser une vis de fin de course (3) en place, dans lequel le vissage de la vis de fin de course (3) en place signifie que la partie avant du manchon de boulon arrière (2) est écartée jusqu'à ce qu'elle soit verrouillée par la surface sous pression (103) du contre-alésage dans le sens axial, et que le manchon de boulon arrière (2) est configuré pour tourner librement dans le trou de boulon d'ancrage.

5. Procédé selon la revendication 1, comprenant :
étape E : visser un écrou anti-glissant (5) sur la vis de fin de course (3) pour verrouiller un suspensoir métallique.

6. Mur-rideau installé en mettant oeuvre le procédé selon la revendication 1.
